# FASCICULE DE BREVET EUROPEEN

(11) **EP 2 005 615 B1**
(45) Date de publication et mention de la délivrance du brevet: **07.10.2015**
(21) Numéro de dépôt: 07731220.5
(22) Date de dépôt: 29.03.2007
(51) Int. Cl.: H04B 7/185

(54) **SYSTEME DE RADIOCOMMUNICATION POUR AERONEF**
FUNKKOMMUNIKATIONSSYSTEM FÜR FLUGZEUGE
RADIOCOMMUNICATION SYSTEM FOR AIRCRAFT

(30) Priorité: 04.04.2006 FR 0602917
(43) Date de publication de la demande: 24.12.2008
(73) Titulaire: AIRBUS OPERATIONS (SAS), 31060 Toulouse (FR)
(72) Inventeur: ULLOA-SANZO, Julia, F-31770 Colomiers (FR); CECCOM, René, F-31470 Saiguede (FR); PICHAVANT, Claude, F-31100 Toulouse (FR); OBERTI, Christophe, F-31770 Colomiers (FR)
(74) Mandataire: Hauer, Bernard
(86) Numéro de dépôt international: PCT/FR2007/000540
(87) Numéro de publication internationale: WO 2007/118972

(56) Documents cités:
- EP-A1- 1 249 814
- WO-A-02/30007
- WO-A2-01/86836
- WO-A2-01/86893
- FR-A1- 2 787 658
- US-A1- 2002 004 411

## Description

La présente invention concerne un système de radiocommunication pour un aéronef, en particulier pour un avion de transport.

Ce système de radiocommunication est destiné aux communications radio (de type sol/vol et/ou de type vol/vol) du poste de pilotage de l'aéronef. On sait que les moyens de radiocommunication du poste de pilotage d'un aéronef sont, en général, répartis dans une pluralité d'unités indépendantes de type LRU ("Line Replaceable Unit" en anglais).

On sait également que les besoins de moyens de communication sol/vol et vol/vol sont en pleine expansion. La saturation du spectre de radiofréquences demande le développement de nouveaux moyens de radiocommunication. En outre, en plus des communications vocales, on assiste également à une augmentation du besoin de transmission de données, et ceci à des vitesses de plus en plus élevées. A cela s'ajoutent des exigences de disponibilité et de redondance de ces moyens de radiocommunication, qui sont de plus en plus strictes. Les normes usuelles imposent, notamment, la ségrégation des sources d'alimentation électrique entre les différents moyens de radiocommunication et exigent qu'au moins un moyen de radiocommunication reste toujours actif à tout moment. En ajoutant des contraintes de portée d'utilisation des ondes radio, ces exigences obligent à embarquer plusieurs systèmes du même type pour assurer une redondance. Malgré cela, le risque n'est pas exclu que l'équipage de l'aéronef se retrouve sans moyens de radiocommunication disponibles à bord, en cas de panne en vol de ces moyens de radiocommunication suivie d'une panne électrique.

Toutes ces exigences impliquent donc d'augmenter considérablement le nombre d'équipements ecnbarqués. Ceci présente de nombreux inconvénients, en particulier en engendrant une augmentation
- de poids,
- d'espace alloué,
- de consommation électrique.
- de besoins de ventilation,
- d'interface vers des équipements de contrôle dans le poste de pilotage, et
- de complexité dans les tâches de maintenance.

Par ailleurs, on connaît :
- par le document FR-2 787 658, un système de radiocommunication pour aéronef, qui comporte des moyens de radiocommunication destinés à la transmission vocale et à la transmission de données numériques, chacun desdits moyens de radiocommunication comprenant un moyen d'intarface de rediofréquence et étant susceptible d'être utilisé en émission et en réception, ainsi qu'un module d'interface principal qui est unique et qui est formé de manière à réaliser l'acquisition et l'envoi de signaux vers au moins un équipement externe audit système de radiocommunication ;
- par le document WO-02/30007, un procédé de sélection d'une station sol, au sein d'un réseau de télécommunication aèronautique, en fonction de la position géographique d'un aéronef ;
- par le document US-2002/004411, un appareil radio hybride pour un poste radio mobile qui est susceptible de fonctionner au moins sur deux réseaux radio utilisant des protocoles différents ;
- par le document WO-01/86836, une architecture de réseau pour des communications de données air/sol ; et
- par le document WO,01/86893. une antenne permettant de fonctionner avec une pluralité de systèmes de type avionique.

La présente invention concerne un système de radiocommunication pour aéronef, qui permet de remédier aux inconvénients précités,

A cet effet, selon l'invention, ledit système de radiocommunication est remarquable en ce qu'il comporte au moins une et au plus deux unités de radiocommunication intégrées à chaque fois dans un boitier unique correspondant, et en ce que chacune desdites unités de radiocommunication comporte :
- l'ensemble des moyens de radiocommunication du poste de pilotage de l'aéronef qui sont destinés à la transmission vocale et à la transmission de données numériques, chacun desdits moyens de radiocommunication comprenant un moyen d'interface de radiofréquence et étant susceptible d'être utilisé en émission et en réception ;
- des moyens de traitement de signaux qui sont associés auxdits moyens d'interface de radiofréquence ; et
- un module d'interface principal qui est unique et qui est formé de manière à réaliser le traitement des interfaces de tous lesdits moyens de radiocommunication, en réalisant l'acquisition et l'envoi de signaux vers au moins un équipement externe audit système de radiocommunication.

Ainsi, grâce à l'invention, tous les moyens de radiocommunication du poste de pilotage sont intégrés dans un boîtier unique qui comporte de plus, notamment, un unique module d'interface principal. Par conséquent, en simplifiant l'installation (comme précisé ci-dessous) et en intégrant notamment toutes les fonctions de radiocommunication du poste de pilotage dans un boîtier unique, on augmente la sécurité et la fiabilité du système de radiocommunication. Comme également précisé ci-dessous, on obtient ainsi des avantages en termes de taille, de poids, de consommation électrique, de maintenance d'équipements, et de capacité d'évolution.

De façon avantageuse, ledit ensemble de moyens de radiocommunication comporte :
- au moins un moyen de radiocommunication à très hautes fréquences ;
- au moins un moyen de radiocommunication à hautes fréquences ; et
- au moins un moyen de radiocommunication satellitaire.

Dans un premier mode de réalisation, ledit système de radiocommunication comporte une seule unité de radiocommunication (du type précité) qui est interfacée avec des systèmes d'antenne existants et qui comporte les mêmes interfaces avec des équipements de l'aéronef que des systèmes de radiocommunication usuels. Dans ce cas, l'intégration des fonctions est réalisée au niveau dudit module d'interface principal qui réalise le traitement des interfaces entre les moyens de radiocommunication et des équipements de l'aéronef qui sont externes audit système de radiocommunication.

En outre, dans un second mode de réalisation, ledit système de radiocommunication comporte deux unités de radiocommunication distinctes qui sont intégrées dans ledit boîtier unique. Ceci permet d'augmenter la sécurité et la fiabilité du système de radiocommunication conforme à l'invention.

Dans ce second mode de réalisation, le système de radiocommunication comporte, dans une première variante de réalisation, des connections doublées entre des éléments semblables desdites deux unités de radiocommunication. Cette première variante de réalisation est particulièrement simple, mais elle présente toutefois certains inconvénients (augmentation du nombre de câbles à installer et de connexions à gérer, sensibilité accrue aux pertes en ligne, sensibilité accrue aux interférences).

Aussi, pour remédier à ces inconvénients, ledit système de radiocommunication comporte, dans une seconde variante de réalisation, une unité d'interface auxiliaire (comportant de préférence deux modules coopérants montés respectivement sur les deux unités de radiocommunication) qui est formée de manière à créer une interface entre les deux unités de radiocommunication, en permettant des transmissions d'informations entre ces deux unités de radiocommunication. Dans cette seconde variante de réalisation, le nombre de connexions à effectuer, ainsi que les longueurs de ces connexions, sont nettement inférieurs à ceux de la première variante de réalisation précitée, ce qui permet de remédier aux problèmes d'installation précités. De plus, cette seconde variante de réalisation permet, par exemple, à un équipement qui est connecté à une première desdites unités de radiocommunication d'utiliser une antenne qui est connectée à la seconde unité de radiocommunication, et vice-versa, ce qui augmente la flexibilité d'utilisation des ressources disponibles en temps normal, et en cas de panne autorise plus que ce qui est demandé par la réglementation.

Par ailleurs, dans un mode de réalisation particulier (applicable aussi bien audit premier mode de réalisation précité qu'audit second mode de réalisation précité), lesdits moyens de traitement de signaux (d'une unité de radiocommunication) font partie d'un unique module de traitement de signaux, qui est commun audit ensemble de moyens de radiocommunication de ladite unité de radiocommunication. Ce module de traitement de signaux est formé de manière à permettre un traitement en parallèle d'une pluralité de signaux différents. Ceci permet d'améliorer la disponibilité des ressources et la robustesse du système de radiocommunication contre des pannes. On notera qu'un module de traitement de signaux peut traiter plusieurs signaux en même temps, à savoir des signaux en provenance de ses propres interfaces et/ou des signaux en provenance de l'autre unité de radiocommunication. Aussi, par exemple, la panne d'un processeur à l'intérieur d'un module n'empêche pas le traitement des signaux, car ces derniers peuvent être traités par les autres processeurs de l'unité de radiocommunication considérée ou par l'autre unité de radiocommunication.

Dans ce cas, les moyens d'interface de radiofréquence des différents moyens de radiocommunication sont formés de manière à transformer un signal radio reçu en un signal commun avec les mêmes caractéristiques, quel que soit le moyen de radiocommunication. Ce signal commun est ensuite traité dans ledit module unique de traitement de signaux.

Par ailleurs, dans un mode de réalisation particulier (applicable à tous les modes de réalisation précédents), ledit système de radiocommunication comporte de plus des moyens de traitement de panne interne, qui réalisent une reconfiguration automatique dudit système de radiocommunication lors d'une panne interne de sorte que ce dernier conserve un nombre maximal de fonctions.

La présente invention concerne également un dispositif de radiocommunication du type comportant :
- un système d'antennes ;
- un système de radiocommunication ; et
- un ensemble d'équipements raccordés.

Selon l'invention, ce dispositif de radiocommunication est remarquable en ce que ledit système de radiocommunication est tel que celui précité.

On notera que l'intégration (précisée ci-dessus et conforme à l'invention) des équipements de radiocommunication permet notamment d'obtenir les avantages suivants :
- une réduction de volume qui est supérieure à 30% concernant l'équipement électronique ;
- une réduction de masse qui est supérieure à 30% ;
- une réduction de la consommation électrique qui est supérieure à 25% ;
- une disponibilité accrue des moyens de radiocommunication, puisque les ressources communes peuvent être assignées à chaque instant au moyen de radiocommunication désiré ;
- une fiabilité plus élevée par rapport à une architecture usuelle de système de radiocommunication (comportant une pluralité de moyens de radiocommunication et de modules associés qui sont indépendants les uns des autres) ; et
- une maintenance plus aisée, car on utilise en principe une seule et même technologie, en provenance d'un même fournisseur, pour tous les moyens de radiocommunication.

De plus, avec le système de radiocommunication conforme à l'invention, un utilisateur conserve les mêmes capacités de communication simultanées que pour un système de radiocommunication usuel, sans contrainte de transmission et de réception supplémentaire.

Les figures du dessin annexé feront bien comprendre comment l'invention peut être réalisée. Sur ces figures, des références identiques désignent des éléments semblables.

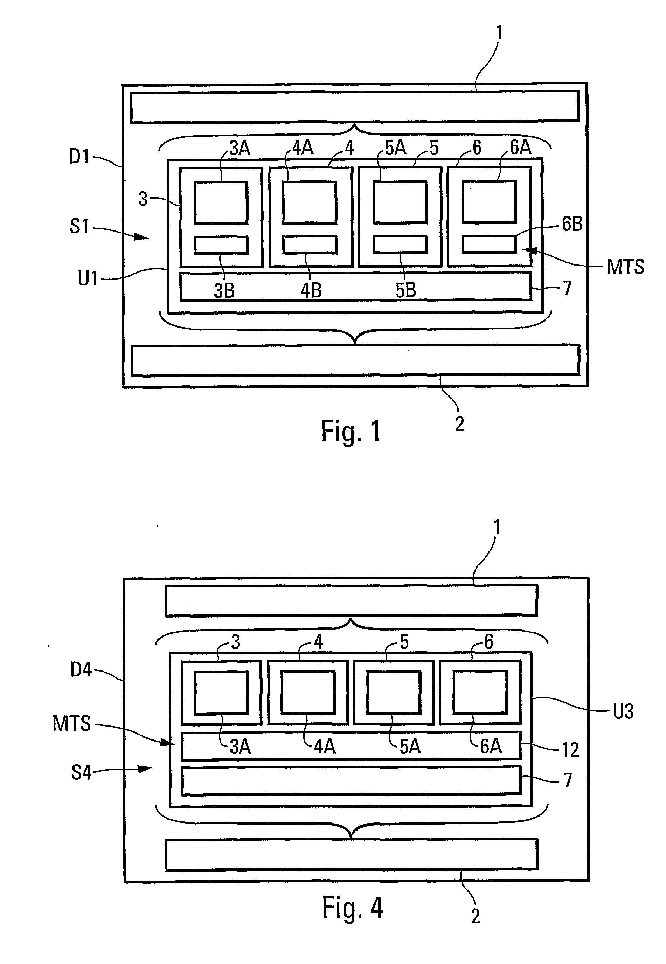

Les figures 1 à 5 sont les schémas synoptiques d'une pluralité de modes de réalisation différents d'un dispositif de radiocommunication conforme à l'invention.

Le dispositif de radiocommunication D1 à D5 conforme à l'invention et représenté sur les figures 1 à 5 est destiné aux communications radio de type sol/vol et ou de type vol/vol, à partir du poste de pilotage d'un aéronef, en particulier d'un avion de transport.

De façon usuelle, un tel dispositif de radiocommunication D1 à D5 qui est embarqué sur l'aéronef comporte :
- au moins un système d'antenne 1 usuel ;
- un système de radiocommunication S1 à S5 ; et
- au moins un ensemble 2 d'équipements raccordés de types usuels, en particulier des systèmes de l'aéronef.

Selon l'invention, ledit système de radiocommunication S1 à S5 comporte au moins une et au plus deux unités de radiocommunication U1 à U4 intégrées à chaque fois dans un boîtier unique correspondant (non représenté). De plus, selon l'invention, chacune desdites unités de radiocommunication U1 à U4 comporte :
- l'ensemble des moyens de radiocommunication 3, 4, 5 et 6 du poste de pilotage de l'aéronef, qui sont destinés à la transmission vocale et à la transmission de données numériques. Par transmission, on entend aussi bien l'émission que la réception. Chacun desdits moyens de radiocommunication 3 à 6 comprend un moyen d'interface de radiofréquence 3A, 4A, 5A, 6A usuel, qui est intégré, et est donc susceptible d'être utilisé à la fois en émission et en réception ;
- des moyens de traitement de signaux MTS précisés ci-dessous, qui sont associés auxdits moyens d'interface de radiofréquence 3A à 6A ; et
- un module d'interface principal 7 qui est commun auxdits moyens de radiocommunication 3 à 6 et qui est formé de manière à réaliser le traitement des interfaces de tous ces moyens de radiocommunication 3 à 6, en réalisant l'acquisition et l'envoi de signaux vers au moins un équipement qui est externe audit système de radiocommunication S1 à S5 (et qui fait partie dudit ensemble 2). Ce processus implique notamment l'adaptation d'impédances et la mise au niveau électrique des signaux électriques d'entrée et de sortie, ainsi que la protection contre des surcharges des interfaces physiques.

Ainsi, grâce à l'invention, tous les moyens de radiocommunication 3 à 6 du poste de pilotage sont intégrés dans un boîtier unique qui comporte de plus, notamment, un unique module d'interface principal 7. Par conséquent, en simplifiant l'installation du système de radiocommunication S1 à S5 (comme précisé ci-dessous) et en intégrant notamment toutes les fonctions de radiocommunication du poste de pilotage dans un boîtier unique, on augmente la sécurité et la fiabilité dudit système de radiocommunication S1 à S5. On obtient également des avantages en termes de taille, de poids, de consommation électrique, de maintenance d'équipements, et de capacité d'évolution.

Dans un mode de réalisation particulier, ledit ensemble de moyens de radiocommunication 3, 4, 5 et 6 comporte :
- au moins un moyen de radiocommunication 3 à très hautes fréquences, de type VDR ("VHF Data Radio" en anglais avec "VHF" pour "Very High Frequency"), présentant les caractéristiques suivantes : bande de fréquences : 118,000 à 136,975 MHz avec un espacement de 8,33 kHz (mode voix) ou de 25 kHz (voix ou données) entre les canaux ;
- au moins un moyen de radiocommunication 4 à hautes fréquences, de type HFDR ("HF Data Radio" en anglais avec "HF" pour "High Frequency"), présentant les caractéristiques suivantes : bande de fréquences : 2,8000 à 23,9999 MHz avec un espacement de 1 KHz entre les canaux (mode voix), et bande de fréquences : 2,000 à 29,9999 MHz avec un espacement de 100 Hz entre les canaux (mode données) ;
- un éventuel moyen de radiocommunication 5 particulier. Il peut notamment s'agir de ressources libres qui sont réservées dans le système de radiocommunication afin de pouvoir implémenter plus tard de nouveaux moyens de radiocommunication. Ces ressources libres concernent, par exemple, les futurs moyens de communication large bande à courte portée dans la bande VHF (comme les systèmes basés sur les techniques B-VHF ou IS-95) ou aussi dans la bande L, comme par exemple les systèmes basés sur les techniques CDMA ou DS-CDMA ou 802.16a/20 (connexions UMTS). Il peut également s'agir de ressources libres pour des systèmes VDL Mode 4 et NexSAT, même si ces ressources libres peuvent être intégrées sur les moyens de radiocommunication déjà utilisées et peuvent ne pas requérir un moyen de radiocommunication à part ; et
- au moins un moyen de radiocommunication 6 satellitaire, de type SATCOM ("SATellite COMmunication" en anglais), présentant les caractéristiques suivantes: bande de fréquences L: 1525,0 à 1660,5 MHz.

Dans un mode de réalisation préféré, ledit système de radiocommunication S1 à S5 comporte trois moyens de radiocommunication 3 à très hautes fréquences, deux moyens de radiocommunication 4 à hautes fréquences, deux moyens de radiocommunication 5 particuliers (ou emplacements libres), et un moyen de radiocommunication satellitaire 6.

Dans le premier mode de réalisation représenté sur la figure 1, ledit système de radiocommunication S1 comporte une seule unité de radiocommunication U1 du type précité, qui est interfacée avec un système d'antenne 1 existant et qui comporte les mêmes interfaces avec des équipements de l'aéronef que des systèmes de radiocommunication usuels. A cet effet, chaque moyen de radiocommunication 3 à 6 comporte un élément de traitement individuel 3B à 6B, lesdits éléments de traitement individuel 3B à 6B formant lesdits moyens de traitement de signaux MTS. Dans ce premier mode de réalisation, l'intégration des fonctions est réalisée au niveau dudit module d'interface principal 7 qui réalise le traitement des interfaces entre les moyens de radiocommunication 3 à 6 et des équipements de l'aéronef qui sont externes audit système de radiocommunication et qui font partie dudit ensemble 2.

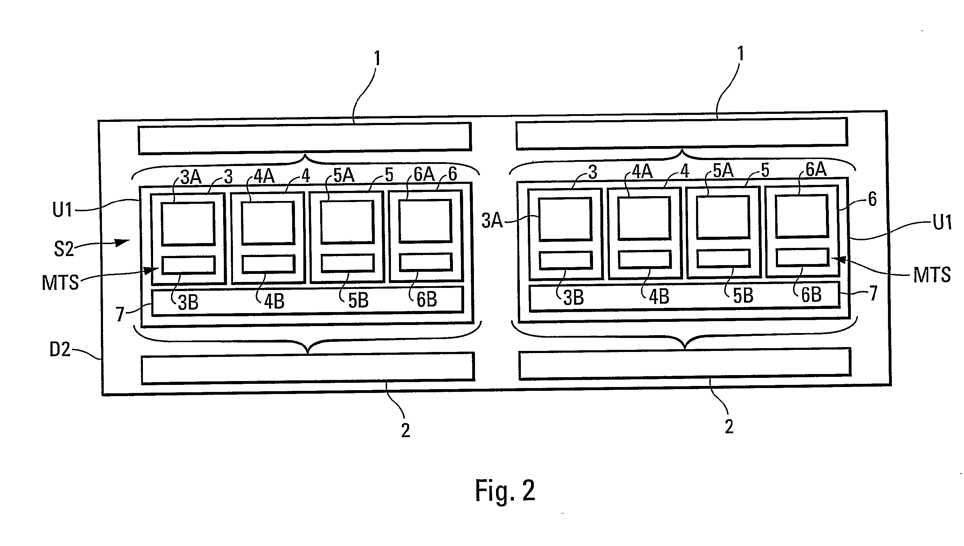

En outre, pour notamment augmenter la sécurité et la fiabilité, ledit système de radiocommunication S2 comporte, dans un mode de réalisation particulier représenté sur la figure 2, deux unités de radiocommunication U1 qui sont par exemple indépendantes et semblables à celle du système de radiocommunication S1 de la figure 1. Ceci permet d'obtenir un système de radiocommunication S2 redondant.

De plus, pour augmenter la flexibilité de ce dernier mode de réalisation, le système de radiocommunication S2 peut comporter des connections doublées (non représentées) entre des éléments semblables desdites deux unités de radiocommunication U1. Ce mode de réalisation est particulièrement simple, mais il présente toutefois certains inconvénients (augmentation du nombre de câbles à installer et de connexions à gérer, sensibilité accrue aux pertes en ligne, sensibilité accrue aux interférences).

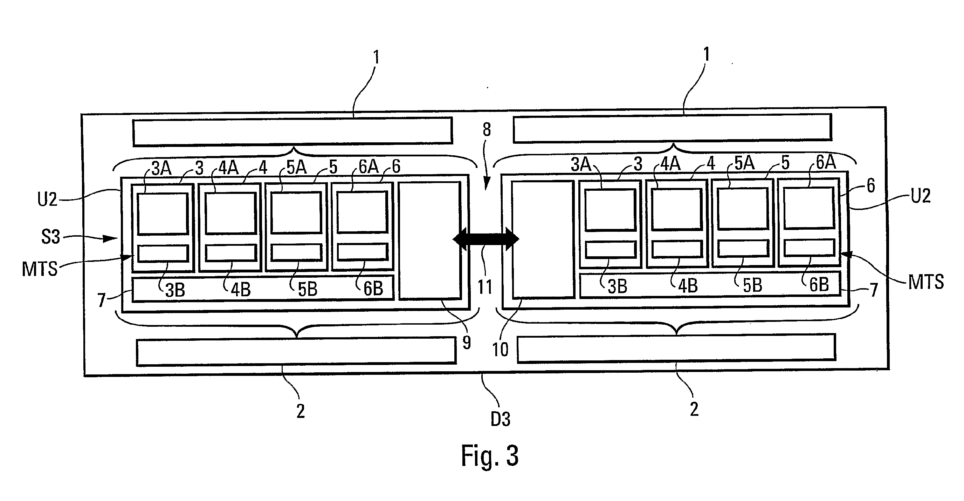

Aussi, pour remédier à ces inconvénients, ledit système de radiocommunication comporte, dans un autre mode de réalisation S3 représenté sur la figure 3, une unité d'interface auxiliaire 8 (comportant, de préférence, deux modules coopérants 9 et 10 qui sont montés respectivement sur les deux unités de radiocommunication U2) qui est formée de manière à créer une interface entre les deux unités de radiocommunication U2, en permettant des transmissions d'informations entre ces deux unités de radiocommunication U2, comme illustré par une double liaison 11. Dans cette variante de réalisation, le nombre de connexions à effectuer, ainsi que les longueurs de ces connexions, sont nettement inférieurs à ceux de la variante de réalisation représentée sur la figure 2, ce qui permet de remédier aux problèmes d'installation précités. De plus, cette variante de réalisation permet, par exemple, à un équipement qui est connecté à une première desdites unités de radiocommunication U2 d'utiliser une antenne qui est connectée à la seconde unité de radiocommunication U2, et vice-versa, ce qui augmente la flexibilité d'utilisation des ressources disponibles en temps normal, et en cas de panne autorise plus que ce qui est demandé par la réglementation.

Les systèmes de radiocommunication S1, S2, S3 précédents comportent une pluralité d'éléments individuels 3B à 6B de traitement de signaux qui sont à chaque fois intégrés dans le moyen de radiocommunication 3 à 6 correspondant, qui forment lesdits moyens MTS, et qui sont dédiés à chaque type de signal radio. Cette solution est très simple, puisque chaque moyen de radiocommunication 3 à 6 présente ses propres caractéristiques de signal (fréquence, niveau, ...). De plus, cette solution permet de faire un traitement du signal aussi bien analogique que numérique.

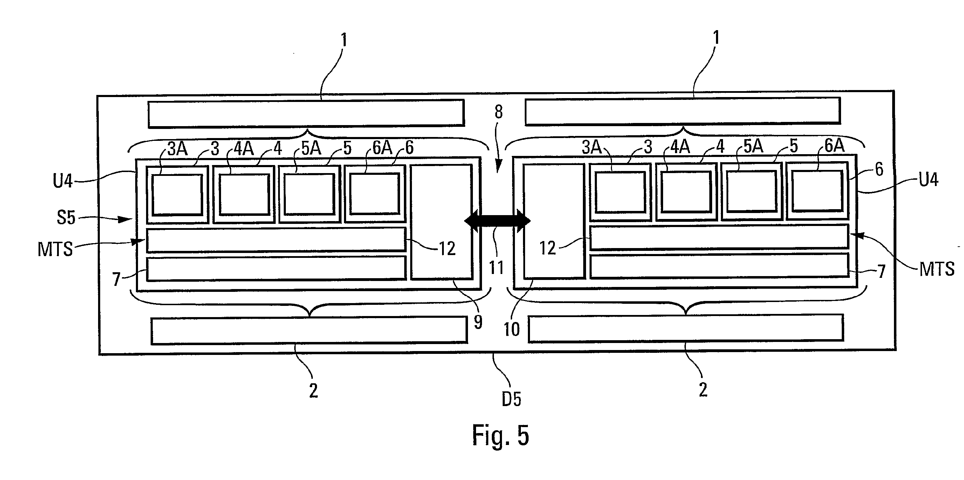

Toutefois, pour augmenter le niveau d'intégration, dans un mode de réalisation particulier applicable aussi bien à un système de radiocommunication S4 comportant une seule unité de radiocommunication U3, comme représenté sur la figure 4, qu'à un système de radiocommunication S5 comportant deux unités de radiocommunication U4, comme représenté sur la figure 5, lesdits moyens de traitement de signaux MTS (d'une unité de radiocommunication U3, U4) font partie d'un unique module de traitement de signaux 12, qui est commun à tous les moyens de radiocommunication 3 à 6 de ladite unité de radiocommunication U3, U4. Ce module de traitement de signaux 12 est formé de manière à permettre un traitement en parallèle d'une pluralité de signaux différents. Ceci permet d'améliorer la disponibilité des ressources et la robustesse du système de radiocommunication S4, S5 contre des pannes. On notera qu'un module de traitement de signaux 12 peut traiter plusieurs signaux en même temps, à savoir des signaux en provenance de ses propres interfaces et/ou des signaux en provenance de l'autre unité de radiocommunication. Aussi, la panne d'un processeur à l'intérieur d'un module n'empêche pas le traitement des signaux, car ces derniers peuvent être traités par les autres processeurs de l'unité de radiocommunication considérée ou par l'autre unité de radiocommunication.

Dans ce cas, les moyens d'interface de radiofréquence 3A à 6A des différents moyens de radiocommunication 3 à 6 sont formés de manière à transformer un signal radio reçu en un signal commun avec les mêmes caractéristiques, quel que soit le moyen de radiocommunication 3 à 6. Ce signal commun est ensuite traité dans ledit module unique de traitement de signaux 12.

Par ailleurs, dans un mode de réalisation particulier, ledit système de radiocommunication S1 à S5 comporte de plus des moyens (non représentés) de traitement de panne interne, qui réalisent une reconfiguration automatique dudit système de radiocommunication S1 à S5 lors d'une panne interne de sorte que ce dernier conserve un nombre maximal de fonctions.

On notera que l'intégration (précisée ci-dessus et conforme à l'invention) des équipements de radiocommunication dans le système de radiocommunication S1 à S5 permet notamment d'obtenir les avantages suivants :
- une réduction de volume qui est supérieure à 30% concernant l'équipement électronique ;
- une réduction de masse qui est supérieure à 30% ;
- une réduction de la consommation électrique qui est supérieure à 25% ;
- une disponibilité accrue des moyens de radiocommunication 3 à 6, puisque les ressources communes peuvent être assignées à chaque instant au moyen de radiocommunication désiré ;
- quel que soit le mode de réalisation considéré, la possibilité de réaliser des interfaces analogiques et/ou numériques avec des systèmes de l'aéronef (audio et données) ;
- une fiabilité plus élevée par rapport à une architecture usuelle de système de radiocommunication (comportant une pluralité de moyens de radiocommunication et de modules associés qui sont indépendants les uns des autres) ; et
- une maintenance plus aisée, car on utilise en principe une seule et même technologie, en provenance d'un même fournisseur, pour tous les moyens de radiocommunication 3 à 6.

De plus, avec le système de radiocommunication S1 à S5 conforme à l'invention, un utilisateur conserve les mêmes capacités de communication simultanées que pour un système de radiocommunication usuel, sans contrainte de transmission et de réception supplémentaire.

## Revendications

1. Système de radiocommunication pour aéronef, ledit systeme de radiocommunication (S1 à S5) comportant :
- des moyens de radiocommunication (3 à 6) qui sont destinés à la transmission vocale et à ta transmission de données numériques, chacun desdits moyens de radiocommunication (3 à 6) comprenant un moyen d'interface de radiofréquence (3A à 6A) et étant susceptible d'être utilisé en émission et en réception ; et
- un module d'interface principal (7) qui est unique et qui est formé de manière à réaliser le traitement des interfaces de tous lesdits moyens de radiocommunication (3 à 6), en réalisant l'acquisition et l'envoi de signaux vers au moins un équipement externe audit système de radio-communication (S1 à SS),
**caractérisé en ce qu'**il comports, de plus, deux unités de radiocommunication (U1 à U4), ainsi que des moyens de traitement de signaux (MTS) qui sont associés auxdits moyens d'interface de radiofréquence (3A et 6A), **en ce que** l'ensemble desdits moyens de radiocommunication (3 à 6) du poste de pilotage de l'aéronef, ledit module d'interface principal (7) et lesdits moyens de traitement de signaux (MTS) sont tous agencés dans lesdites unités de radiocommunication (U1 à U4) qui sont intégrées dans un boîtier unique, et **en ce que** ledit système de radiocommunication comporte, de plus, une unité d'interface auxiliaire (8) qui est formée de manière à créer une interface entre les deux unités de radiocommunication en permettent des transmissions d'informations entre ces deux unités de radiocommunication et en permettant à un équipement qui est connecté à l'une desdites unités de radiocommunication d'utiliser une antenne qui est connectée à l'autre unité de radiocommunication.

2. Système selon la revendication 1,
**caractérisé en ce que** ledit ensemble de moyens de radiocommunication comporte :
- au moins un moyen de radiocommunication (3) à très hautes fréquences ;
- au moins un moyen de radiocommunication (4) à hautes fréquences ; et
- au moins un moyen de radiocommunication satellitaire (6).

3. Système selon l'une des revendications 1 et 2,
**caractérisé en ce qu'**il comporte deux unités de radiocommunication (U1) distinctes.

4. Système selon la revendication 3,
**caractérisé en ce qu'**il comporte des connections doublées entre des éléments semblables desdites deux unités de radiocommunication

5. Système selon l'une quelconque des revendications précédentes,
**caractérisé en ce que** les moyens d'interface de radiofréquence (3A à 6A) des différents moyens de radiocommunication (3 à 6) sont formés de manière à transformer un signal radio reçu en un signal commun avec les mêmes caractéristiques, quel que soit le moyen de radiocommunication (3 à 6).

6. Système selon l'une quelconque des revendications précédentes,
**caractérisé en ce que** lesdits moyens de traitement de signaux (MTS) d'une unité de radiocommunication (U3, U4) font partie d'un unique module (12) de traitement de signaux, qui est commun audit ensemble de moyens de radiocommunication (3 à 6) de ladite unité de radiocommunication (U3. U4).

7. Système selon l'une quelconque des revendications précédentes,
**caractérisé en ce qu'**il comporte, de plus, des moyens de traitement de panne interne, qui réalisent une reconfiguraration automatique dudit système de radiocommunication (S1 à S5) lors d'une panne interne de sorte que ce dernier conserve un nombre maximal de fonctions.

8. Dispositif de radiocommunication du type comportent :
- un système d'antennes (1) ;
- un système de radiocommunication (S1 à S5) ; et
- un ensemble (2) d'équipements raccordés,
**caractérisé en ce que** ledit système de radiocommunication (S1 à S5) est tel que celui spécifié sous l'une quelconque des revendications 3 à 7.

9. Aéronef,
**caractérisé en ce qu'**il comporte un dispositif de radiocommunication (D1 à D5) tel que celui spécifié sous la revendication 8.

## Patentansprüche

1. Funkverkehrssystem für ein Flugzeug, wobei das Funkverkehrssystem (S1 bis S5) umfasst:
- Funkverkehrsmittel (3 bis 6), die für die vokale Übertragung und die Übertragung von digitalen Daten bestimmt sind, wobei jedes der Funkverkehrsmittel (3 bis 6) ein Funkfrequenzschnittstellenmittel (3A bis 6A) umfasst und geeignet ist, für das Senden und den Empfang eingesetzt zu werden; und
- ein Hauptschnittstellenmodul (7), das einzig und derart ausgebildet ist, dass es die Bearbeitung der Schnittstellen aller Funkverkehrsmittel (3 bis 6) durchführt, wobei es die Erfassung und das Senden von Signalen zu mindestens einer Ausrüstung außerhalb des Funkverkehrssystems (S1 bis S5) durchführt,
**dadurch gekennzeichnet, dass** es ferner zwei Funkverkehrseinheiten (U1 bis U4) sowie Mittel zur Signalbearbeitung (MTS), die mit den Funkverkehrsschnittstellenmitteln (3A bis 6A) verbunden sind, umfasst, dass die Gesamtheit der Funkverkehrsmittel (3 bis 6) des Steuerpostens des Flugzeugs, das Hauptschnittstellenmodul (7) und die Signalbearbeitungsmittel (MTS) alle in den Funkverkehrseinheiten (U1 bis U4) angeordnet sind, die in ein einziges Gehäuse integriert sind, und dass das Funkverkehrssystem ferner eine Hilfsschnittstelleneinheit (8) umfasst, die derart ausgebildet ist, dass sie eine Schnittstelle zwischen den beiden Funkverkehrseinheiten erzeugt, wobei Informationsübertragungen zwischen diesen beiden Funkverkehrseinheiten ermöglicht werden, und wobei es einer Ausrüstung, die an eine der Funkverkehrseinheiten angeschlossen ist, ermöglicht wird, eine Antenne zu verwenden, die an die andere Funkverkehrseinheit angeschlossen ist.

2. System nach Anspruch 1,
**dadurch gekennzeichnet, dass** die Gesamtheit von Funkverkehrsmitteln umfasst:
- mindestens ein Funkverkehrsmittel (3) mit sehr hohen Frequenzen;
- mindestens ein Funkverkehrsmittel (4) mit hohen Frequenzen; und
- mindestens ein Satellitenfunkverkehrsmittel (6).

3. System nach einem der Ansprüche 1 und 2,
**dadurch gekennzeichnet, dass** es zwei getrennte Funkverkehrseinheiten (U1) umfasst.

4. System nach Anspruch 3,
**dadurch gekennzeichnet, dass** es Doppelanschlüsse zwischen ähnlichen Elementen der beiden Funkverkehrseinheiten umfasst.

5. System nach einem der vorhergehenden Ansprüche,
**dadurch gekennzeichnet, dass** die Funkfrequenzschnittstellenmittel (3A bis 6A) der verschiedenen Funkverkehrsmittel (3 bis 6) derart ausgebildet sind, dass sie ein empfangenes Funksignal in ein gemeinsames Signal mit denselben Merkmalen umformen, unabhängig vom Funkverkehrsmittel (3 bis 6).

6. System nach einem der vorhergehenden Ansprüche,
**dadurch gekennzeichnet, dass** die Signalbearbeitungsmittel (MTS) einer Funkverkehrseinheit (U3, U4) Teil eines einzigen Moduls (12) zur Signalbearbeitung sind, das der Gesamtheit von Funkverkehrsmitteln (3 bis 6) der Funkverkehrseinheit (U3, U4) gemeinsam ist.

7. System nach einem der vorhergehenden Ansprüche,
**dadurch gekennzeichnet, dass** es ferner Mittel zur Bearbeitung einer internen Panne umfasst, die eine automatische Neukonfiguration des Funkverkehrssystems (S1 bis S5) bei einer internen Panne durchführen, so dass dieses letztgenannte eine maximale Anzahl von Funktionen behält.

8. Funkverkehrseinrichtung, umfassend:
- ein Antennensystem (1);
- ein Funkverkehrssystem (S1 bis S5); und
- eine Gesamtheit (2) von angeschlossenen Ausrüstungen,
**dadurch gekennzeichnet, dass** das Funkverkehrssystem (S1 bis S5), wie in einem der Ansprüche 1 bis 7 spezifiziert, ausgeführt ist.

9. Flugzeug,
**dadurch gekennzeichnet, dass** es eine Funkverkehrseinrichtung (D1 bis D5), wie in Anspruch 8 spezifiziert, umfasst.

## Claims

1. Radiocommunication system for aircraft, said radiocommunication system (S1 to S5) comprising:
- radiocommunication means (3 to 6) which are intended for voice transmission and digital-data transmission, each of said radiocommunication means (3 to 6) comprising a radiofrequency interface means (3A to 6A) and being able to be used in transmit and receive modes; and
- a single main interface module (7) which is designed so as to process the interfaces of all said radiocommunication means (3 to 6) by acquiring and sending signals to at least one piece of equipment which is external to said radiocommunication system (S1 to S5),
**characterised in that** it also comprises two radiocommunication units (U1 to U4) and signal processing means (MTS) which are associated with said radiofrequency interface means (3A to 6A), **in that** the set of said radiocommunication means (3 to 6) in the cockpit of the aircraft, said main interface module (7) and said signal processing means (MTS) are all arranged in said radiocommunication units (U1 to U4) which are integrated in a single housing, and **in that** said radiocommunication system also comprises an auxiliary interface unit (8) which is designed so as to produce an interface between the two radiocommunication units, by enabling information transmissions between these two radiocommunication units and by enabling a piece of equipment which is connected to one of said radiocommunication units to use an antenna which is connected to the other radiocommunication unit.

2. System according to claim 1,
**characterised in that** said set of radiocommunication means comprises:
- at least one very high frequency radiocommunication means (3);
- at least one high frequency radiocommunication means (4); and
- at least one satellite radiocommunication means (6).

3. System according to either claim 1 or claim 2,
**characterised in that** it comprises two separate radiocommunication units (U1).

4. System according to claim 3,
**characterised in that** it comprises duplicated connections between similar elements of said two radiocommunication units.

5. System according to any of the preceding claims,
**characterised in that** the radiofrequency interface means (3A to 6A) of the different radiocommunication means (3 to 6) are designed so as to transform a received radio signal into a common signal having the same characteristics, whatever the radiocommunication means (3 to 6).

6. System according to any of the preceding claims,
**characterised in that** said signal processing means (MTS) of a radiocommunication unit (U3, U4) are part of a single signal processing module (12), which is common to said set of radiocommunication means (3 to 6) of said radiocommunication unit (U3, U4).

7. System according to any of the preceding claims,
**characterised in that** it also comprises internal failure processing means, which carry out an automatic reconfiguration of said radiocommunication system (S1 to S5) during an internal failure such that said system retains a maximum number of functions.

8. Radiocommunication device of the type comprising:
- an antenna system (1);
- a radiocommunication system (S1 to S5); and
- a set (2) of connected equipment,
**characterised in that** said radiocommunication system (S1 to S5) is such as that specified under any of claims 1 to 7.

9. Aircraft,
**characterised in that** it comprises a radiocommunication device (D1 to D5) such as that specified under claim 8.
